# EUROPÄISCHE PATENTSCHRIFT

(11) **EP 2 801 794 B1**
(45) Veröffentlichungstag und Bekanntmachung des Hinweises auf die Patenterteilung: **27.10.2021**
(21) Anmeldenummer: 14153968.4
(22) Anmeldetag: 05.02.2014
(51) Int. Cl.: G01D 21/00, G01D 5/244

(54) **Positionsmesseinrichtung**
Position measuring device
Dispositif de mesure de position

(30) Priorität: 10.05.2013 DE 102013208629
(43) Veröffentlichungstag der Anmeldung: 12.11.2014
(73) Patentinhaber: Dr. Johannes Heidenhain GmbH, 83301 Traunreut (DE)
(72) Erfinder: Mittmann, Rudolf, 83342 Tacherting (DE); Joachimsthaler, Ingo, 83278 Traunstein (DE)

(56) Entgegenhaltungen:
- EP-A1- 0 790 489
- EP-A2- 2 148 522
- WO-A2-2010/116145
- JP-A- 2004 318 439

## Beschreibung

Die Erfindung betrifft eine Positionsmesseinrichtung nach dem Oberbegriff des Anspruchs 1 sowie ein Verfahren zum Programmieren der Positionsmesseinrichtung nach Anspruch 11.

Eine derartige Positionsmesseinrichtung, insbesondere in Form eines Längen- oder Winkelmessgerätes, umfasst einen Messwertaufnehmer zur Durchführung einer Positionsmessung sowie einen Speicher zur Speicherung von Parameterdaten, welche eine Konfiguration definieren, in der die Positionsmesseinrichtung betreibbar ist.

Der Messwertaufnehmer einer Positionsmesseinrichtung kann beispielsweise dadurch realisiert sein, dass eine Abtasteinheit der Positionsmesseinrichtung eine zugehörige Maßverkörperung abtastet, die mit einem relativ zu der Abtasteinheit bewegbaren Körper verbunden ist. Hierdurch lässt sich die Position jenes Körpers relativ zu der Abtasteinheit erfassen (Positionsmessung).

Die Konfiguration, welche durch die im Speicher der Positionsmesseinrichtung abgelegten Parameterdaten definiert ist, kann beispielsweise die Auflösung festlegen, mit der die Positionsmesseinrichtung arbeitet, sowie die Schnittstelle, über die die Positionsmesseinrichtung mit einer zugeordneten Auswerteeinheit zu verbinden ist, usw.

Je nach dem aktuellen Einsatzzweck einer Positionsmesseinrichtung kann es erforderlich sein, deren Konfiguration zu ändern, also z.B. an einen neuen Einsatzzweck anzupassen. So ist es aus der EP 0 660 209 A1 bekannt, in einer Positionsmesseinrichtung einen Speicherbereich vorzusehen, in welchem Parameterdaten ablegbar sind, die der Positionsmesseinrichtung extern zugeführt werden, um hierdurch eine bestimmte Konfiguration der Positionsmesseinrichtung zu definieren. Hierfür ist ein mit der zu programmierenden Positionsmesseinrichtung kompatibles Datenverarbeitungsgerät erforderlich, welches die aus einer externen Datenquelle stammenden Parameterdaten im hierfür vorgesehenen Speicherbereich der Positionsmesseinrichtung ablegt.

Weitere Positionsmesseinrichtungen mit programmierbaren Konfigurationen sind aus WO 2010/116145 A2, EP 2 148 522 A2, EP 0 790 489 A1 und JP 2004-318439 A bekannt.

Hiervon ausgehend liegt der Erfindung das Problem zugrunde, die Programmierung einer Positionsmesseinrichtung der eingangs genannten Art weiter zu vereinfachen.

Dieses Problem wird zum Einen durch die Schaffung einer Positionsmesseinrichtung mit den Merkmalen des Anspruchs 1 gelöst. Danach sind in einem Speicher einer gattungsgemäßen Positionsmesseinrichtung erfindungsgemäß Daten und Befehle abgelegt/gespeichert, mittels derer mindestens eine weitere, d. h. von der in der Positionsmesseinrichtung ohnehin vorhandenen Konfiguration (Grundkonfiguration), verschiedene Konfigurationen aktivierbar bzw. erzeugbar ist, mit welcher die Positionsmesseinrichtung ebenfalls betrieben werden kann.

Dem Nutzer einer erfindungsgemäßen Positionsmesseinrichtung stehen also unterschiedliche Konfigurationen zum Betreiben der Positionsmesseinrichtung zur Verfügung, wobei unter diesen Konfigurationen die für einen jeweiligen Einsatzzweck geeignete ohne zusätzlichen Rückgriff auf externe Datenquellen, wie z. B. externe Speicher oder Datenbanken, ausgewählt und aktiviert werden kann. Denn diejenigen Daten, welche für die Einrichtung der mindestens einen weiteren Konfiguration auf der Positionsmesseinrichtung erforderlich sind, werden in einem Speicher der Positionsmesseinrichtung selbst bereit gehalten.

Darüber hinaus sind in der Positionsmesseinrichtung auch diejenigen Befehle abgelegt/ gespeichert, welche für eine jeweilige Neukonfiguration der Positionsmesseinrichtung erforderlich sind, die also etwa angeben, welche Schritte zur Neukonfiguration der Positionsmesseinrichtung unter Nutzung bestimmter Parameterdaten ausführen sind.

Zur Umprogrammierung der Positionsmesseinrichtung, mit dem Ziel, diese in einer anderen Konfiguration betreiben zu können, kann daher nicht nur auf externe Datenquellen verzichtet werden, sondern es ist zudem nicht erforderlich, ein speziell auf die jeweilige Positionsmesseinrichtung zugeschnittenes Datenverarbeitungsgerät bereitzustellen, welches die Umprogrammierung der Positionsmesseinrichtung vornimmt. Vielmehr kann hierfür eine universelle (einen Prozessor aufweisende) Programmiereinheit genutzt werden, die zur Umprogrammierung ganz unterschiedlicher Positionsmesseinrichtungen eingesetzt werden kann. Die Programmiereinheit muss lediglich in der Lage sein, die in einer Positionsmesseinrichtung zur Verfügung gestellten Konfigurationsmöglichkeiten zu erkennen und sodann die zu einer ausgewählten Konfiguration gehörigen Befehle abzuarbeiten. Dies kann beispielsweise dadurch ermöglicht werden, dass in der Positionsmesseinrichtung neben den Daten und Befehlen zur Definition unterschiedlicher Konfigurationen auch ein Verzeichnis der Konfigurationsmöglichkeiten abgelegt ist, welches von der Programmiereinheit ausgelesen werden kann.

Die zur Verfügung stehenden Konfigurationsmöglichkeiten können an der Programmiereinheit angezeigt und die gewünschte Konfiguration (automatisiert oder von einem Nutzer) ausgewählt werden. Daraufhin veranlasst die Programmiereinheit die Umprogrammierung der Positionsmesseinrichtung zur Erzeugung einer neuen Konfiguration, unter der letztere betrieben werden soll, und zwar durch Verwendung solcher Daten und Befehle, die in der Positionsmesseinrichtung selbst abgelegt sind.

Es ist daher weder erforderlich, dass die Programmiereinheit die zur Umprogrammierung der Positionsmesseinrichtung erforderlichen Daten über eine externe Datenquelle bezieht, noch ist es erforderlich, dass die Programmiereinheit gerätespezifische, auf eine jeweils zu programmierende Positionsmesseinrichtung zugeschnittene Befehle bzw. Programmabläufe aufweist, um die Umprogrammierung der Positionsmesseinrichtung vornehmen zu können. Sowohl die zur Umprogrammierung erforderlichen Daten als auch die notwendigen Befehle werden vielmehr in der Positionsmesseinrichtung selbst bereitgehalten.

Somit kann ein Nutzer einer Positionsmesseinrichtung deren Konfiguration durch Umprogrammierung neu einstellen, ohne hierfür auf externe Datenquellen zugreifen zu müssen und ohne über eine speziell für die jeweilige Positionsmesseinrichtung ausgelegte Programmiereinheit verfügen zu müssen. Vielmehr können unterschiedliche Positionsmesseinrichtungen - unter Nutzung der dort abgelegten Daten und Befehle - mit einer universellen Programmiereinheit ohne Zugriff auf externe Datenquellen zur Änderung ihrer Konfiguration umprogrammiert werden.

Einer jeweiligen weiteren Konfiguration können dabei auch Befehle zugeordnet sein, die zur zyklischen Redundanzprüfung ("Cyclic Redundancy Check") CRCs bzw. Checksummen prüfen und gegebenenfalls berichtigen, wenn die entsprechende weitere Konfiguration als neue, aktuelle Konfiguration aktiviert werden soll.

Die Summe der Befehle, welche einer jeweiligen weiteren Konfiguration zugeordnet sind, stellt im Ergebnis einen Programmcode dar, der durch die externe Programmiereinheit und deren Prozessor abzuarbeiten ist. Die Programmiereinheit übernimmt also die Funktion eines Interpreters. Dementsprechend ist für die Programmiereinheit nur eine vergleichsweise geringe Rechenleistung erforderlich, so dass diese beispielsweise durch einen einfachen Mikrocontroller (mit Display und einer Tastatur bzw. einem Tastenblock) realisiert werden kann. Die elektrische Versorgung der Programmiereinheit könnte über einen USB-Anschluss erfolgen, so dass die Notwendigkeit eines Netzteiles entfällt. Weiterhin kann mittels eines in die Programmiereinheit integrierten Akkumulators auch ein kabelloser Betrieb ermöglicht werden.

Bei einer Umprogrammierung der Positionsmesseinrichtung mittels der Programmiereinheit kann letztere auch die elektrische Versorgung der Programmiereinheit übernehmen. Da eine Umprogrammierung in der Regel nur kurze Zeit in Anspruch nimmt, ist der Energiebedarf vergleichsweise gering.

Die Positionsmesseinrichtung kann anfänglich so programmiert sein, dass eine bestimmte Konfiguration als Grundkonfiguration hinterlegt ist, unter welcher die Positionsmesseinrichtung unmittelbar betrieben werden kann, und dass weitere Konfigurationen jeweils durch einen Satz in einem Speicher der Positionsmesseinrichtung abgelegter Daten und zugehöriger Befehle zur Verfügung gestellt werden, welche die Umprogrammierung der Positionsmesseinrichtung zur Nutzung einer jeweils ausgewählten weiteren Konfiguration ermöglichen.

Gemäß einer ersten Ausgestaltung der Erfindung sind dabei für eine weitere Konfiguration sämtliche Daten, welche diese Konfiguration definieren, in der Positionsmesseinrichtung gespeichert.

Nach einer anderen Ausgestaltung kann der erforderliche Speicherbedarf reduziert werden, indem für eine weitere Konfiguration der Positionsmesseinrichtung nur solche Daten im Speicher hinterlegt sind, hinsichtlich derer sich jene Konfiguration von einer anderen (ersten) Konfiguration unterscheidet. Die Programmierung der besagten weiteren Konfiguration auf der Positionsmesseinrichtung erfolgt dann ausgehend von jener ersten Konfiguration in der Weise, dass nur diejenigen Parameterdaten der ersten Konfiguration geändert, insbesondere überschrieben, werden, in denen sich die neu zu programmierende Konfiguration von der ersten Konfiguration unterscheidet.

Hierfür ist es erforderlich, dass die erste Konfiguration, von der ausgehend die neue Konfiguration erstellt werden soll, gerade als aktuell nutzbare Konfiguration der Positionsmesseinrichtung programmiert, d.h. aktiviert ist. Konkret kann hierfür vorgesehen sein, dass die Positionsmesseinrichtung über eine Grundkonfiguration verfügt, die nicht nur zum Zeitpunkt der Auslieferung der Positionsmesseinrichtung sondern auch vor einer jeden Umprogrammierung automatisch als aktuell nutzbare Konfiguration der Positionsmesseinrichtung eingerichtet wird. Von allen weiteren Konfigurationen müssen dann jeweils nur solche Daten gespeichert sein, in welchen sich erstere von der Grundkonfiguration unterscheiden, sowie die zugehörigen Befehle, mit denen diese Daten in entsprechende Speicherbereiche der Positionsmesseinrichtung geschrieben werden, um die aktuell nutzbare Konfiguration umzudefinieren.

Weiterhin kann der für die Hinterlegung einer jeweiligen weiteren Konfiguration erforderliche Speicherbedarf reduziert werden, wenn zur Aktivierung dieser Konfiguration Teilbereiche des Speichers an einer Mehrzahl Speicherplätze mit dem gleichen Datum belegt werden sollen. In diesem Fall braucht das zum Belegen des entsprechenden Teilbereiches des Speichers vorgesehene Datum anfänglich lediglich einmal in der Positionsmesseinrichtung hinterlegt zu sein - zusammen mit entsprechenden Befehlen, die ein mehrfaches Kopieren jenes Datums in solche Teilbereiche des Speichers veranlassen, in welchen die jeweils aktuell aktive Konfiguration zu hinterlegen ist.

Weiterhin können in der Positionsmesseinrichtung einzelne Programmblöcke bzw. Teilkonfigurationen gespeichert sein, die zur Einstellung unterschiedlicher weiterer Konfigurationen nutzbar (aufrufbar) sind.

Soweit erforderlich, kann einer weiteren Konfiguration ein Zugriffscode zugeordnet sein, über den der Zugriff auf die entsprechende Konfiguration auf bestimmte Nutzer beschränkbar ist. So kann etwa vorgesehen sein, dass einige Konfigurationen von jedem Nutzer der Positionsmesseinrichtung aktivierbar sind, während andere Konfigurationen beispielsweise nur durch den Kundendienst des Herstellers aktiviert werden können.

Weiterhin können die weiteren Konfigurationen zumindest teilweise verschlüsselt in der Positionsmesseinrichtung hinterlegt sein.

Einzelnen Datenworten einer Konfiguration, die gegebenenfalls bei Aktivierung einer anderen Konfiguration überschrieben werden könnten, kann eine Maske zugeordnet sein, die ein Überschreiben auf einzelne Bit oder Byte des Datenwortes beschränkt. Hiermit kann beispielsweise ein Überschreiben von Abgleichwerten verhindert werden.

Ein System, welches eine erfindungsgemäß ausgestaltete Positionsmesseinrichtung sowie eine zugeordnete Programmiereinheit umfasst, ist durch die Merkmale des Anspruchs 8 charakterisiert. Und ein Verfahren, mit dem sich eine erfindungsgemäß ausgestaltete Positionsmesseinrichtung zur Aktivierung einer anderen Konfiguration umprogrammieren lässt, ist in Anspruch 11 angegeben. Weiterbildungen des entsprechenden Systems bzw. Verfahrens sind Gegenstand abhängiger Ansprüche.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische Darstellung einer Positionsmesseinrichtung mit einer zugeordneten Programmiereinheit;
- Fig. 2: eine schematische Darstellung eines Speichers einer Positionsmesseinrichtung, in dem neben einer Grundkonfiguration weitere Konfigurationen abgelegt sind;
- Fig. 3: ein Konfigurationsskript, welches eine Umprogrammierung der Positionsmesseinrichtung hinsichtlich der jeweils aktiven Konfiguration ermöglicht;
- Fig. 4: einen Konfigurationsblock, mit dem eine bestimmte Konfiguration auf der Positionsmesseinrichtung aktivierbar ist;
- Fig. 5: eine Abwandlung des Konfigurationsblockes aus Figur 4;
- Fig. 6: ein mögliches Zusammenspiel unterschiedlicher Konfigurationsblöcke.

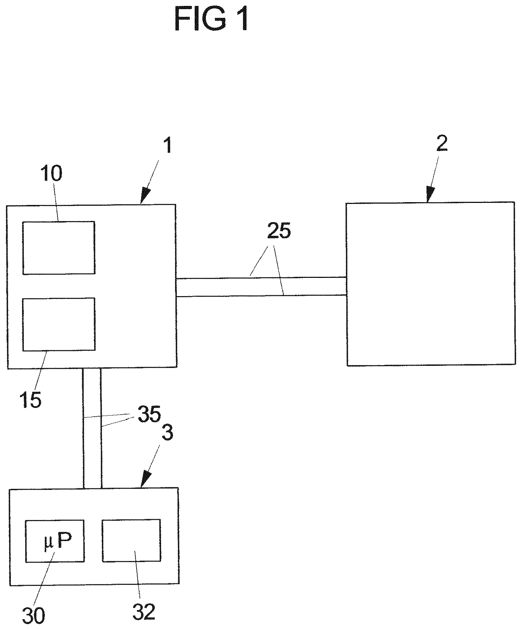

In Figur 1 ist eine Positionsmesseinrichtung 1 dargestellt, die als Komponenten in bekannter Weise unter anderem einen Messwertaufnehmer 10 und einen Speicher 15, zum Beispiel in Form eines EEPROM, aufweist.

Der Messwertaufnehmer 10 dient zur Erzeugung von Positionsmesswerten, zum Beispiel, indem die Änderung der Lage zweier Objekte zueinander erfasst wird. Hierzu kann der Messwertaufnehmer eine Maßverkörperung und eine zugeordnete Abtasteinheit umfassen, die jeweils einem der beiden zueinander bewegbaren Objekte zugeordnet sind. Durch Abtastung der Maßverkörperung mittels der hierfür vorgesehenen Abtasteinheit generiert der Messwertaufnehmer ein Ausgangssignal, welches die Position des einen Objektes bezüglich des anderen Objektes widerspiegelt und welches in der Positionsmesseinrichtung üblicherweise noch aufbereitet wird, bevor es zur weiteren Verarbeitung und Auswertung an eine Auswerteeinheit 2 übertragen wird.

Die Positionsmesseinrichtung 1 kann insbesondere als ein Längenmessgerät oder ein Winkelmessgerät ausgebildet sein, worauf es jedoch vorliegend nicht ankommt. Dies gilt in gleicher Weise für das zur Abtastung einer Maßverkörperung genutzte Messprinzip (zum Beispiel elektro-optisch, induktiv oder magnetisch) und für die Art der generierten Positionsmesswerte (mit inkrementaler oder absoluter Positionsinformation).

Vorliegend geht es vielmehr um die Konfiguration der Positionsmesseinrichtung 1, welche durch einen Satz an Parameterdaten definiert und festgelegt ist. Dies betrifft beispielsweise die Art der Schnittstelle, über die die Positionsmesseinrichtung 1 mit einer zugeordneten Verarbeitungseinheit 2 über Verbindungsleitungen 25 zusammenwirkt, sowie die Auflösung der von der Positionsmesseinrichtung durchführbaren Positionsmessungen. Weitere Beispiele für Eigenschaften der Positionsmesseinrichtung 1, die durch deren Konfiguration festgelegt werden, sind das Ausgabeformat der Positionsmesswerte und der Inhalt eines elektronischen Typenschilds. Darüber hinaus können in Abhängigkeit von der Konfiguration der Positionsmesseinrichtung 1 bestimmte Funktionen aktiviert oder deaktiviert sein, wie etwa die Ausgabe von Zusatzinformationen (z.B. Messwerte von Zusatzsensoren betreffend Temperatur und/oder Beschleunigung) und deren Datenformat, die Abarbeitung von Zusatzfunktionen (z.B. betreffend Diagnosemöglichkeiten und Sicherheitseinstellungen), die zusätzliche Erzeugung analoger Ausgangssignale, die Nutzung von Kompensationsmechanismen (z.B. Amplituden-, Offset- und/oder Phasenkorrektur) usw.

Zur Definition bzw. Festlegung einer Konfiguration, mit der die Positionsmesseinrichtung 1 arbeitet, sind die erforderlichen Parameterdaten in dem Speicher 15 der Positionsmesseinrichtung 1 hinterlegt. So wird regelmäßig vom Hersteller einer Positionsmesseinrichtung eine bestimmte Konfiguration eingestellt, mit der die Positionsmesseinrichtung ausgeliefert wird und in Betrieb genommen werden kann.

In Abhängigkeit von dem konkreten Einsatz der Positionsmesseinrichtung, zum Beispiel der Art der hiermit durchzuführenden Messungen, den Umgebungsbedingungen sowie des Typs einer hieran anzuschließenden Verarbeitungseinheit, kann es gewünscht sein, eine Positionsmesseinrichtung mit einer von der ursprünglich vorgesehenen Konfiguration abweichenden Konfiguration zu betreiben, zum Beispiel, um die Positionsmesseinrichtung über eine andere Schnittstelle mit einer Verarbeitungseinheit verbinden zu können oder um Positionsmessungen mit einer anderen Auflösung durchführen zu können.

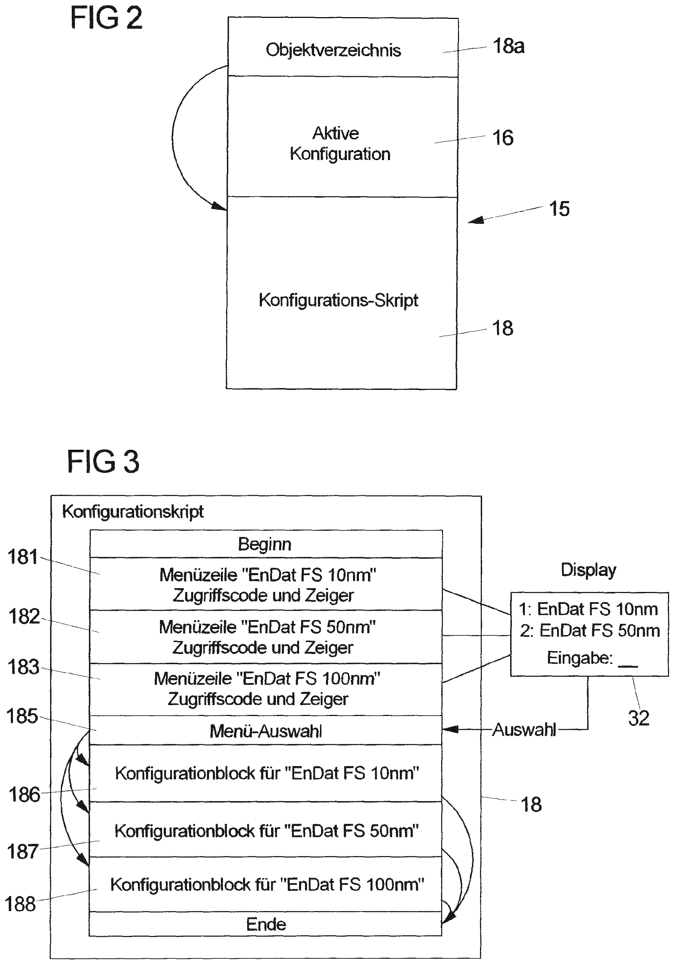

Zu diesem Zweck sind vorliegend im Speicher 15 der Positionsmesseinrichtung 1 neben der ursprünglich vom Hersteller programmierten Grundkonfiguration weitere Daten und Befehle hinterlegt, mittels derer zusätzlich zu der vom Hersteller vorgesehenen Grundkonfiguration noch mindestens eine weitere Konfiguration, insbesondere eine Mehrzahl weiterer Konfigurationen, der Positionsmesseinrichtung erzeugbar/aktivierbar ist. Dies sei nachfolgend anhand Figur 2 näher erläutert.

Hiernach ist in dem Speicher 15 der Positionsmesseinrichtung 1, zusätzlich zu der vom Hersteller programmierten, ursprünglich aktiven Konfiguration 16, ein Konfigurationsskript 18 vorgesehen, welches diejenigen Daten und Befehle enthält, mittels welcher anstelle der Grundkonfiguration 16 mindestens eine hiervon verschiedene, weitere Konfiguration aktivierbar ist, mit der die Positionsmesseinrichtung betrieben werden kann. Das Konfigurationsskript 18 kann bei Bedarf in verschlüsselter Form im Speicher der Positionsmesseinrichtung 1 abgelegt sein.

Die zum Konfigurationsskript 18 gehörenden Befehle bilden einen Programmcode, durch dessen Abarbeitung, wie nachfolgend anhand der Figuren 3 bis 6 in verschiedenen Ausgestaltungen beschrieben werden wird, die Grundkonfiguration 16 der Positionsmesseinrichtung 1 durch eine andere, hiervon verschiedene Konfiguration ersetzbar ist. Hierfür enthält das Konfigurationsskript 18 neben den erforderlichen Befehlen auch diejenigen Daten, welche mittels jener Befehle zur Bildung einer neuen aktiven Konfiguration der Positionsmesseinrichtung in die für die jeweils aktive Konfiguration vorgesehenen Bereiche des Speichers 15 kopiert werden.

Weiterhin ist in dem Speicher 15 der Positionsmesseinrichtung 1 ein Informationssystem, vorliegend in Form eines Objektverzeichnisses 18a hinterlegt, welches angibt, ob in dem Speicher 15 ein Konfigurationsskript 18 hinterlegt ist, und welches gegebenenfalls den Speicherbereich bezeichnet, in welchem das Konfigurationsskript 18 hinterlegt ist.

Das Konfigurationsskript 18 enthält wiederum - zusätzlich zu den Daten und Befehlen, mit denen die einzelnen weiteren Konfigurationen aktivierbar bzw. erzeugbar sind - ein Inhaltsverzeichnis, in dem die optional aktivierbaren weiteren Konfigurationen aufgeführt sind.

Zur Aktivierung einer von der Grundkonfiguration 16 verschiedenen, weiteren Konfiguration der Positionsmesseinrichtung 1 wird das Konfigurationsskript in bestimmter Weise abgearbeitet, und zwar so, dass die aktuell aktive Konfiguration durch eine vorbestimmte andere, weitere Konfiguration ersetzt wird. Hierzu kann, wie in Figur 1 angedeutet, eine Programmiereinheit 3 (über Verbindungsleitungen 35) an die Positionsmesseinrichtung 1 angeschlossen werden.

Alternativ zur Nutzung separater Verbindungsleitungen 35 für den Anschluss der Programmiereinheit 3 könnte die Programmiereinheit 3 auch über diejenigen Verbindungsleitungen 25 (Schnittstelle) an die Positionsmesseinrichtung 1 angeschlossen werden, welche im Übrigen der Verbindung zwischen Positionsmesseinrichtung 1 und Verarbeitungseinheit 2 dienen (und über welche im Messbetrieb die jeweiligen Messwerte übertragen werden). Der Programmierbetrieb (Programmiermodus) ließe sich dann durch einen speziellen Schnittstellenbefehl oder eine Spezialfunktion aktivieren. Bei dieser Variante wäre die Programmiereinheit 3 auch durch ein Datenverarbeitungsprogramm (Software) in der Verarbeitungseinheit realisierbar.

Die Programmiereinheit 3 stellt insbesondere einen Prozessor 30 (zum Beispiel in Form eines Mikroprozessors) zur Verfügung, mittels dem das im Speicher 15 der Positionsmesseinrichtung 1 hinterlegte Konfigurationsskript 18 zur Änderung der aktiven Konfiguration der Positionsmesseinrichtung 1 abarbeitbar bzw. ausführbar ist.

Die Verwendung einer zusätzlichen Programmiereinheit 3 zum Abarbeiten des im Speicher 15 der Positionsmesseinrichtung 1 hinterlegten Konfigurationsskriptes ist deshalb erforderlich, weil die Positionsmesseinrichtung 1 selbst nicht über einen Prozessor verfügt, mit dem das Konfigurationsskript 18 abarbeitbar wäre.

Es ist zwar auch möglich, die Positionsmesseinrichtung 1 mit einem solchen Prozessor auszustatten; dies wäre jedoch mit einem erheblichen zusätzlichen Aufwand sowie zusätzlichen Kosten bei der Herstellung einer Positionsmesseinrichtung verbunden. Die vorliegend vorgeschlagene Ausgestaltung der Positionsmesseinrichtung 1, wie anhand der Figuren 1 und 2 beschrieben, ermöglicht es demgegenüber gerade, mit nur einer Programmiereinheit 3 eine Mehrzahl verschiedener, auch unterschiedlich konfigurierter Positionsmesseinrichtungen (ohne eigenen Prozessor) in einfacher Weise neu zu konfigurieren.

Dabei ist es nicht erforderlich, in einer Programmiereinheit 3, mittels der die Konfiguration einer bestimmten Positionsmesseinrichtung 1 geändert werden soll, ein spezielles, auf eine jeweilige Positionsmesseinrichtung zugeschnittenes Programm vorzusehen. Vielmehr sind die hierfür erforderlichen Daten und Befehle bereits in der jeweiligen Positionsmesseinrichtung 1 selbst hinterlegt, wie vorstehend anhand der Figuren 1 und 2 beschrieben.

Dies bedeutet auch, dass die Programmiereinheit 3 bei der Erzeugung einer neuen Konfiguration in einer jeweiligen Positionsmesseinrichtung 1 nicht auf externe Datenquellen, wie zum Beispiel Datenbanken, zurückgreifen muss; denn die für eine Aktivierung einer neuen Konfiguration der Positionsmesseinrichtung 1 erforderlichen Daten sind ja ebenfalls bereits in letzterer hinterlegt (zusammen mit den hierbei abzuarbeitenden Befehlen).

Ein Beispiel für ein Konfigurationsskript 18 ist in Figur 3 gezeigt. Das Inhaltsverzeichnis dieses Konfigurationsskriptes 18 enthält im Ausführungsbeispiel drei Einträge 181, 182, 183, von denen ein jeder eine bestimmte weitere Konfiguration bezeichnet, die im Rahmen des Konfigurationsskriptes 18 aktivierbar sein soll. Zu jeder dieser drei Konfigurationen ist in dem Konfigurationsskript 18 ein so genannter Konfigurationsblock 186, 187, 188 hinterlegt (gespeichert), der die zur Aktivierung der entsprechenden weiteren Konfiguration erforderlichen Daten und Befehle enthält. Vorliegend unterscheiden sich die drei weiteren Konfigurationen jeweils hinsichtlich der Auflösung (10 nm bzw. 50 nm oder 100 nm), mit der unter der jeweiligen Konfiguration die Positionsmessungen durchgeführt werden.

Wird an eine Positionsmesseinrichtung 1, die ein Konfigurationsskript 18 der in Figur 3 gezeigten Art enthält, eine Programmiereinheit 3 mit Tastatur und Display 32 angeschlossen, wie in Figur 1 dargestellt, so erscheint auf dem Display 32 der Programmiereinheit ein Auswahlmenü, welches die Konfigurationsmöglichkeiten des in der Positionsmesseinrichtung hinterlegten Konfigurationsskriptes 18 zusammenfasst, und zwar auf der Grundlage des zum Konfigurationsskript gehörenden Inhaltsverzeichnisses mit den Einträgen 181, 182, 183. Mit anderen Worten ausgedrückt, dient eine jeweilige Bezeichnung der einzelnen Konfigurationen in den Einträgen 181, 182, 183 des Inhaltsverzeichnisses des Konfigurationsskriptes 18 zugleich auch als Menüzeile für die Darstellung eines entsprechenden Auswahlmenüs auf dem Bildschirm 32 der Programmiereinheit 3.

Dabei ist im Ausführungsbeispiel den einzelnen Konfigurationen jeweils ein Zugriffscode zugeordnet, so dass ein Zugriff auf die einzelnen Konfigurationen auf bestimmte Nutzer beschränkt sein kann. Vorliegend sei angenommen, dass derjenige Nutzer, der gemäß Figur 3 mit einer Programmiereinheit 3 eine Umprogrammierung der Positionsmesseinrichtung 1 durch Aktivierung einer anderen Konfiguration vornehmen möchte, lediglich auf die ersten beiden Konfigurationen bzw. die zugehörigen Einträge 181, 182 im Inhaltsverzeichnis und die entsprechenden Konfigurationsblöcke 186, 187 zugreifen kann. In diesem Fall werden auf dem Display 32 der Programmiereinheit lediglich die ersten beiden Einträge 181, 182 des in der Positionsmesseinrichtung hinterlegten Inhaltsverzeichnisses in einem Auswahlmenü wiedergegeben, entsprechend einer Konfiguration mit der Auflösung 10 nm oder 50 nm.

Für die Durchführung dieses ersten Schrittes bei der Aktivierung einer neuen Konfiguration der Positionsmesseinrichtung 1 ist es lediglich erforderlich, dass die Programmiereinheit 3 in der Lage ist, die relevanten Daten des Inhaltsverzeichnisses des in der Positionsmesseinrichtung 1 hinterlegten Konfigurationsskriptes 18 auszulesen.

Über einen Block 185 ("Menü-Auswahl") des Konfigurationsskriptes 18 kann sodann mittels der Programmiereinheit 3 eine der beiden zur Verfügung stehenden und auf dem Display 32 dargestellten Konfigurationen ausgewählt werden.

Nach Auswahl einer der Konfigurationen mittels der Programmiereinheit wird sodann der entsprechende Konfigurationsblock (186 oder 187) abgearbeitet, indem unter Anwendung der zu dem Konfigurationsblock gehörenden Befehle die ebenfalls zu dem Konfigurationsblock gehörenden Daten in denjenigen Bereich des Speichers 15 der Positionsmesseinrichtung 1 kopiert werden, in welchem jeweils diejenige Konfiguration abzulegen ist, unter welcher die Positionsmesseinrichtung 1 aktuell betrieben werden soll. Hierbei werden, soweit erforderlich, Daten der zuletzt in diesem Speicherbereich befindlichen (anderen) Konfigurationen überschrieben.

Zur Durchführung dieses weiteren Verfahrensschrittes ist die Programmiereinheit 3 eingerichtet (programmiert), mittels ihres Prozessors 30 diejenigen Befehle auszuführen, die zu dem entsprechenden Konfigurationsblock (186 oder 187) gehören.

Somit kann eine einzelne Programmiereinheit genutzt werden, um ganz unterschiedliche Positionsmesseinrichtungen durch Änderung der jeweils aktiven Konfiguration umzuprogrammieren. Es ist lediglich erforderlich, dass die Programmiereinheit in der Lage ist, das Inhaltsverzeichnis eines in der jeweiligen Positionsmesseinrichtung hinterlegten Konfigurationsskriptes zu lesen und ggf. für einen Nutzer in Form eines Menüs auf dem eigenen Bildschirm anzuzeigen (sofern die Auswahl einer Konfiguration nicht automatisiert erfolgen soll). Weiterhin muss die Programmiereinheit in der Lage sein, mittels ihres Prozessors die zu einer jeweiligen Konfiguration des Konfigurationsskriptes gehörenden Befehle auszuführen, derart, dass die zu der ausgewählten Konfiguration gehörenden Daten in einen Speicherbereich der Positionsmesseinrichtung kopiert werden, welcher für die aktuell aktive Konfiguration vorgesehen ist.

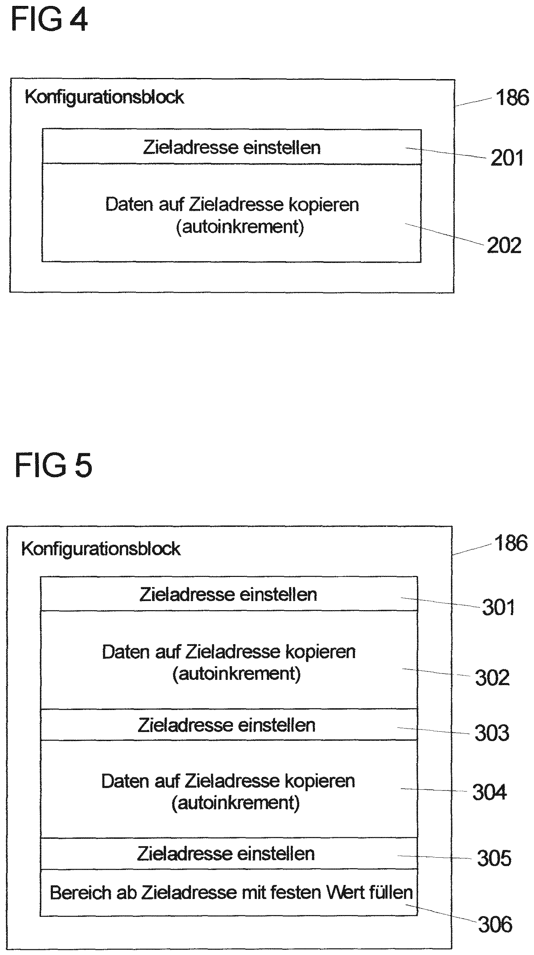

In einer ersten Ausführungsform erfolgt die Aktivierung einer neuen Konfiguration, wie in Figur 4 dargestellt, in der Weise, dass im Rahmen des abzuarbeitenden Konfigurationsblockes (z.B. 186) in einem ersten Schritt 201 die Zieladresse für die zu kopierenden Daten eingestellt wird und anschließend die Daten auf diese Zieladresse, das heißt, in den für die jeweils aktive Konfiguration vorgesehenen Speicherbereich, kopiert werden, gemäß dem Schritt 202. Dabei werden die zuvor in jenem Speicherbereich befindlichen Daten überschrieben.

Eine weitere mögliche Ausgestaltung und Abarbeitung eines Konfigurationsblockes 186 ist in Figur 5 dargestellt. Gemäß diesem Ausführungsbeispiel braucht der Konfigurationsblock nicht sämtliche Daten zu enthalten, die zu der entsprechenden Konfiguration gehören. Vielmehr enthält der Konfigurationsblock nur diejenigen Daten, in denen sich die hiermit zu aktivierende Konfiguration von einer anderen möglichen Konfiguration (Bezugskonfiguration) der Positionsmesseinrichtung unterscheidet. Ist die letztgenannte Konfiguration aktuell aktiviert, so kann die ausgewählte neue Konfiguration in sehr einfacher Weise dadurch erzeugt werden, dass nur diejenigen Daten der zuletzt aktiven Konfiguration überschrieben werden, in denen sich die neue Konfiguration von letzterer unterscheidet. Hierdurch kann eine jeweilige Konfiguration bzw. der zugehörige Konfigurationsblock mit den zur Aktivierung der Konfiguration benötigten Daten und Befehlen Speicherplatz-sparend in der Positionsmesseinrichtung abgelegt werden.

Als Bezugs-Konfiguration eignet sich dabei z.B. eine Grundkonfiguration, die bei erstmaliger Inbetriebnahme der Positionsmesseinrichtung (z. B. herstellerseitig) bereits aktiviert worden ist. Für alle weiteren (von jener Grundkonfiguration verschiedenen) Konfigurationen, die in der Positionsmesseinrichtung als potentiell aktivierbar hinterlegt werden sollen, müssen dann jeweils nur diejenigen Daten gespeichert werden, in denen sich die jeweilige weitere Konfiguration von der Grundkonfiguration unterscheidet, sowie diejenigen Befehle, mit denen jene Daten in die entsprechenden Speicherbereiche kopiert werden können, wobei jeweils Parameterdaten der Grundkonfiguration zur Bildung neuer aktiver Parameterdaten überschrieben werden.

Letzteres ist in Figur 5 illustriert, wonach in drei Verfahrensschritten 301, 303 und 305 jeweils unterschiedliche Zieladressen bzw. unterschiedliche Teilbereiche des Speichers 15 (vergl. Fig. 1) ausgewählt werden, wohin Daten der neu zu aktivierenden Konfigurationen kopiert werden sollen, um gezielt bestimmte Parameterdaten der bisherigen Konfiguration zu überschreiben, gemäß den entsprechenden Schritten 302, 304 und 306. Dabei wird vor der Durchführung dieser Kopierschritte 302, 304, 306 die Zieladresse in den zuvor erwähnten Schritten 301, 303, 305 jeweils derart eingestellt (bzw. versetzt), dass die Daten der neu zu aktivierenden Konfiguration jeweils in den richtigen, hierfür vorgesehenen Teilbereich des Speichers 15 geschrieben werden.

Eine Besonderheit besteht dabei noch bezüglich des letzten Kopierschrittes 306. In diesem Kopierschritt wird ein bestimmter Teilbereich des Speichers an allen Speicherplätzen mit demselben Datum beschrieben. In diesem Fall genügt es, wenn das entsprechende Datum als Bestandteil des Konfigurationsblockes 186 einmal abgespeichert ist. Es wird dann über entsprechende Befehle des Konfigurationsblockes 186 auf alle Speicherplätze des betreffenden Teilbereiches des Speichers kopiert. Hierdurch kann der Speicherbedarf der einzelnen Konfigurationsblöcke nochmals reduziert werden. Mit anderen Worten ausgedrückt, wird ein einzelnes Datum aus dem Konfigurationsblock 186 mehrfach in denjenigen Speicherbereich der Positionsmesseinrichtung kopiert, in welchem die jeweils aktive Konfiguration zu hinterlegen ist, so dass ein Teilbereich jenes Speicherbereiches mehrfach (an mehreren Speicherplätzen) mit jenem Datum belegt ist.

Wenn für eine oder mehrere weitere Konfigurationen, wie anhand Figur 5 beschrieben, jeweils eine andere Konfiguration, insbesondere die Grundkonfiguration, als eine Bezugskonfiguration gewählt wird, die jeweils nur in Teilen zu ändern ist, um eine neu ausgewählte weitere Konfiguration zu aktivieren, so ist diese Bezugskonfiguration (insbesondere in Form der Grundkonfiguration) jeweils in dem für die aktuell aktive Konfiguration vorgesehenen Speicherbereich der Positionsmesseinrichtung 1 zu hinterlegen, bevor hieraus durch die entsprechenden Änderungen die aktuell ausgewählte weitere Konfiguration erzeugt werden kann. Hierzu kann beispielsweise vorgesehen sein, vor jeder Aktivierung einer neuen Konfiguration zunächst die Bezugskonfiguration (also insbesondere die Grundkonfiguration) zu aktivieren, also in dem für die jeweils aktive Konfiguration vorgesehenen Speicherbereich zu hinterlegen.

Dies kann in einfacher Weise dadurch ermöglicht werden, dass die Bezugskonfiguration/Grundkonfiguration nicht nur anfänglich in dem für die jeweils aktive Konfiguration vorgesehenen Speicherbereich der Positionsmesseinrichtung hinterlegt wird, sondern zusätzlich auch einmal in dem für die optional aktivierbaren weiteren Konfigurationen vorgesehenen Speicherbereich. Hierdurch lässt sich die Bezugskonfiguration/Grundkonfiguration immer wieder erneut herstellen, so dass zur Erzeugung der weiteren Konfigurationen dann jeweils nur die Differenzdaten bezogen auf die Bezugskonfiguration/Grundkonfiguration vorhanden sein müssen, sowie die zum Kopieren dieser Daten vorgesehenen Befehle.

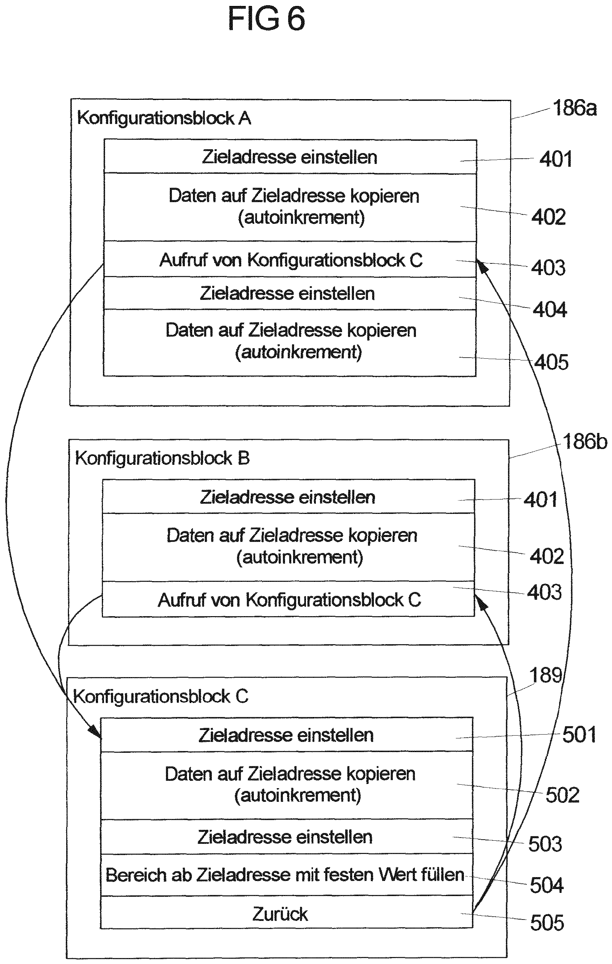

In dem in Figur 6 gezeigten Ausführungsbeispiel greifen zwei unterschiedliche Konfigurationsblöcke 186a, 186b bei ihrer Abarbeitung jeweils auf den gleichen Unterblock 189 zu. Der Zugriff mehrerer unterschiedlicher Konfigurationsblöcke 186a, 186b, ... auf ein und denselben Unterblock 189 ist dann zweckmäßig, wenn die unterschiedlichen Konfigurationsblöcke 186a, 186b, ... bei ihrer Abarbeitung jeweils teilweise identische Schritte auszuführen haben. Diese können dann in dem besagten Unterblock 189 zusammengefasst werden.

Vorliegend ist der Unterblock 189 so ausgeführt, dass bei seiner Abarbeitung Schritten 501 bzw. 503 jeweils unterschiedliche Teilbereiche desjenigen Speicherbereiches adressiert werden, in dem die jeweils zu aktivierende Konfiguration abgelegt wird, und dass hierauf folgend jeweils in einem weiteren Schritt 502 bzw. 504 Daten in den entsprechenden Teilbereich kopiert werden. Anschließend wird gemäß einem Schritt 505 die Fortsetzung der Abarbeitung desjenigen Konfigurationsblockes 186a bzw. 186b ausgelöst, der zuvor in einem Schritt 403 den Unterblock 189 aufgerufen hatte.

Jene beiden Konfigurationsblöcke 186a und 186b unterscheiden sich im Ausführungsbeispiel dadurch, dass bei Abarbeitung des einen Konfigurationsblockes 186a sowohl vor als auch nach Aufruf des Unterblockes 189 jeweils noch andere Schritte 401, 402 bzw. 404, 405 durchzuführen sind, während im Fall des anderen Konfigurationsblockes 186b lediglich vor dem Aufruf des Unterblockes 189 noch andere Verfahrensschritte 401, 402 durchgeführt werden.

Die genannten Verfahrensschritte 401, 402, 404, 405 bestehen dabei im Ausführungsbeispiel wiederum darin, dass bestimmte Teilbereiche des für die zu aktivierende Konfiguration vorgesehenen Speicherbereiches adressiert und mit Daten der zu aktivierenden Konfiguration belegt werden.

Durch die Zusammenfassung von Verfahrensschritten 501 bis 504, die bei der Abarbeitung unterschiedlicher Konfigurationsblöcke 186a, 186b auftreten können, zu einem Unterblock, wird der Speicherplatzbedarf des Konfigurationsskriptes 18 weiter reduziert.

Zusammenfassend stellen die Konfigurationsblöcke, welche jeweils eine potentiell aktivierbare Konfiguration einer Positionsmesseinrichtung 1 definieren, eine Kombination aus einem durch eine Mehrzahl Befehle gebildeten Programmcode sowie den mit diesem Programmcode zu verarbeitenden Daten dar. Zu den Befehlen gehören dabei zunächst insbesondere Kopierbefehle, mit denen die zu einem bestimmten Konfigurationsblock bzw. der entsprechenden Konfiguration gehörenden Daten in denjenigen Speicherbereich der Positionsmesseinrichtung kopiert werden können, in dem die aktuell aktive Konfiguration zu hinterlegen ist. Weitere relevante Befehle sind etwa vorgesehen zur Bestimmung einer Zieladresse im Speicher, zum Springen auf andere Blöcke ("Jump"), zum Aufrufen anderer Blöcke ("Call"), für den Rücksprung ("Return"), zur Kennzeichnung eines Sprungzieles, zur Ausführung bedingter Sprünge (für das Auswerten einfacher Variablen) sowie zur Prüfung bzw. Berichtigung von CRCs bzw. Checksummen.

Die Programmiereinheit 3 bildet dabei einen zugehörigen Interpreter, der in der Lage sein muss, die im Konfigurationsskript der Positionsmesseinrichtung 1 gespeicherten Daten zu lesen sowie die dort abgelegten Befehle auszuführen.

Die vorstehend beschriebene technische Lösung kann auch auf bereits existierende Positionsmesseinrichtungen angewandt werden; es ist lediglich erforderlich, dass diese einen Speicher aufweisen, in dem ein Konfigurationsskript ablegbar ist.

Dabei kann jene Lösung für ganz unterschiedliche Positionsmesseinrichtungen mit einer universellen Programmiereinheit umgesetzt werden. Diese muss lediglich in der Lage sein, die (im Inhaltsverzeichnis des Konfigurationsskriptes aufgeführten) Konfigurationsmöglichkeiten nach einem geräteunabhängigen (einmal definierten) Verfahren aus dem Speicher des jeweiligen Positionsmessgerätes auszulesen und sodann eine Neuprogrammierung der Konfiguration der Positionsmesseinrichtung unter Anwendung der im Speicher der Positionsmesseinrichtung selbst hinterlegten Befehle und Daten vorzunehmen.

## Patentansprüche

1. Positionsmesseinrichtung mit
- einem Messwertaufnehmer (10) zur Durchführung einer Positionsmessung und
- mindestens einem Speicher (15), in dem Parameterdaten gespeichert sind, welche eine aktive Konfiguration definieren, mit der die Positionsmesseinrichtung (1) betreibbar ist,
wobei in dem Speicher (15) der Positionsmesseinrichtung (1) Daten und Befehle gespeichert sind, mittels derer mindestens eine weitere Konfiguration aktivierbar ist, mit der die Positionsmesseinrichtung (1) betrieben werden kann,
**dadurch gekennzeichnet,**
**dass** zur Aktivierung der besagten weiteren Konfiguration an die Positionsmesseinrichtung (1) eine einen Prozessor (30) aufweisende Programmiereinheit (3) anschließbar ist und zur Aktivierung der besagten weiteren Konfiguration an die Positionsmesseinrichtung (1) Befehle mit dem Prozessor (30) ausführbar sind, die der besagten weiteren Konfiguration der Positionsmesseinrichtung (1) zugeordnet sind und die im Speicher (15) der Positionsmesseinrichtung (1) gespeichert sind.

2. Positionsmesseinrichtung nach Anspruch 1, **dadurch gekennzeichnet, dass** die einer jeweiligen weiteren Konfiguration zugeordneten, im Speicher (15) der Positionsmesseinrichtung (1) gespeicherten Daten ausreichend sind zur Aktivierung der jeweiligen weiteren Konfiguration, ohne dass hierfür auf zusätzliche Daten aus einer externen Datenquelle zurückgegriffen werden müsste.

3. Positionsmesseinrichtung nach einem der vorhergehenden Ansprüche, **dadurch gekennzeichnet, dass** für mindestens eine weitere Konfiguration nur ein Teil der Daten, welche diese Konfiguration definieren, im Speicher (15) der Positionsmesseinrichtung (1) gespeichert ist und dass zur Aktivierung dieser Konfiguration in dem Speicher (15) abgelegte Daten mindestens einer anderen Konfiguration genutzt werden.

4. Positionsmesseinrichtung nach Anspruch 3, **dadurch gekennzeichnet, dass** zur Aktivierung der weiteren Konfiguration, für die nur ein Teil der Daten im Speicher (15) der Positionsmesseinrichtung (1) gespeichert ist, die aktuell aktive Konfiguration der Positionsmesseinrichtung (1) nur teilweise mit den Daten der zu aktivierenden weiteren Konfiguration zu überschreiben ist.

5. Positionsmesseinrichtung nach einem der vorhergehenden Ansprüche, **dadurch gekennzeichnet, dass** zur Aktivierung einer weiteren Konfiguration zusätzlich auf Daten aus einem Konfigurationsblock (189) zuzugreifen ist, welcher ebenfalls im Speicher (15) der Positionsmesseinrichtung (1) gespeichert ist und auf den zur Aktivierung einer Mehrzahl unterschiedlicher weiterer Konfigurationen zugegriffen werden kann.

6. Positionsmesseinrichtung nach einem der vorhergehenden Ansprüche, **dadurch gekennzeichnet, dass** die zur wahlweisen Aktivierung einer Mehrzahl unterschiedlicher weiterer Konfigurationen vorgesehenen Daten und Befehle zu einem Konfigurationsskript (18) zusammengefasst sind und dass in einem Inhaltsverzeichnis (181, 182, 183) des Konfigurationsskriptes (18) die aktivierbaren weiteren Konfigurationen bezeichnet sind.

7. Positionsmesseinrichtung nach einem der vorhergehenden Ansprüche, **dadurch gekennzeichnet, dass** mindestens einer weiteren Konfiguration ein Zugriffscode zugeordnet ist, um Beschränkungen hinsichtlich der Nutzer, welche die entsprechende weitere Konfiguration aktivieren können, zu ermöglichen.

8. Programmierbares System, umfassend eine Positionsmesseinrichtung (1) nach einem der Ansprüche 1 bis 7 und eine an die Positionsmesseinrichtung (1) anschließbare Programmiereinheit (3), wobei die Programmiereinheit (3) einen Prozessor (30) aufweist, mit dem die einer jeweiligen weiteren Konfiguration zugeordneten, in einem Speicher (15) der Positionsmesseinrichtung (1) abgelegten Befehle ausführbar sind, um die besagte weitere Konfiguration zu aktivieren.

9. Programmierbares System nach Anspruch 8 mit einer Positionsmesseinrichtung (1) nach Anspruch 6, **dadurch gekennzeichnet, dass** die Programmiereinheit (3) ein Display (32) aufweist, auf dem Angaben aus einem dem Konfigurationsskript (18) zugeordneten Inhaltsverzeichnis (18a) als Auswahlmenü anzeigbar sind.

10. Programmierbares System nach einem der Ansprüche 8 oder 9, **dadurch gekennzeichnet, dass** die Programmiereinheit (3) durch ein Datenverarbeitungsprogramm in einer der Positionsmesseinrichtung (1) zugeordneten Verarbeitungseinheit (2), an welche im Messbetrieb der Positionsmesseinrichtung (1) Messewerte übertragen werden, realisiert ist.

11. Verfahren zum Programmieren einer Positionsmesseinrichtung (1) nach einem der Ansprüche 1 bis 7, wobei
a) an die Positionsmesseinrichtung (1) eine einen Prozessor (30) aufweisende Programmiereinheit (3) angeschlossen wird und
b) mittels des Prozessors (30) der Programmiereinheit (3) die einer bestimmten weiteren Konfiguration der Positionsmesseinrichtung (1) zugeordneten Befehle ausgeführt werden, die in einem Speicher (15) der Positionsmesseinrichtung (1) gespeichert sind, um diese Konfiguration zu aktivieren.

12. Verfahren nach Anspruch 11, **dadurch gekennzeichnet, dass** bei Ausführung der Befehle zur Aktivierung der weiteren Konfiguration ausschließlich auf Daten zugegriffen wird, welche im Speicher (15) der Positionsmesseinrichtung (1) gespeichert sind.

13. Verfahren nach Anspruch 11 oder 12, **dadurch gekennzeichnet, dass** die Daten und Befehle mehrerer weiterer Konfigurationen in der Positionsmesseinrichtung (1) zu einem Konfigurationsskript (18) zusammengefasst sind, dem ein Inhaltsverzeichnis (18a) zugeordnet ist, und das in dem Inhaltsverzeichnis (18a) enthaltene Bezeichnungen der aktivierbaren weiteren Konfigurationen auf einem Display (32) der Programmiereinheit (3) angezeigt werden.

## Claims

1. Position measurement device comprising
- a measurement transducer (10) for performing a position measurement and
- at least one memory (15), in which parameter data defining an active configuration, with which the position measurement device (1) is operable, are stored,
wherein data and commands are stored in the memory (15) of the position measurement device (1) by means of which at least one further configuration, with which the position measurement device (1) can be operated, is activated,
**characterized**
**in that**, for activating said further configuration, a programming unit (3) having a processor (30) is connectable to the position measurement device (1) and, for activating said further configuration, commands to the position measurement device (1), which are assigned to said further configuration of the position measurement device (1) and which are stored in the memory (15) of the position measurement device (1), are able to be executed with the processor (30).

2. Position measurement device according to Claim 1, **characterized in that** the data that are assigned to a respective further configuration and are stored in the memory (15) of the position measurement device (1) are sufficient for the activation of the respective further configuration, without the need to use additional data from an external data source for this purpose.

3. Position measurement device according to either of the preceding claims, **characterized in that**, for at least one further configuration, only some of the data defining said configuration are stored in the memory (15) of the position measurement device (1) and **in that**, for activating said configuration, data of at least one other configuration that are stored in the memory (15) are used.

4. Position measurement device according to Claim 3, **characterized in that**, for activating the further configuration for which only some of the data are stored in the memory (15) of the position measurement device (1), the currently active configuration of the position measurement device (1) is to be overwritten only partially with the data of the further configuration to be activated.

5. Position measurement device according to one of the preceding claims, **characterized in that**, for activating a further configuration, data from a configuration block (189), which is likewise stored in the memory (15) of the position measurement device (1) and which can be accessed for activating a plurality of different further configurations, should additionally be accessed.

6. Position measurement device according to one of the preceding claims, **characterized in that** the data and commands provided for optionally activating a plurality of different further configurations are combined into a configuration script (18), and **in that** the activatable further configurations are designated in a table of contents (181, 182, 183) of the configuration script (18) .

7. Position measurement device according to one of the preceding claims, **characterized in that** an access code is assigned to at least one further configuration in order to allow restrictions with respect to the users that can activate the corresponding further configuration.

8. Programmable system comprising a position measurement device (1) according to one of Claims 1 to 7 and a programming unit (3) that is connectable to the position measurement device (1), wherein the programming unit (3) has a processor (30) with which the commands that are assigned to a respective further configuration and are stored in a memory (15) of the position measurement device (1) are executable in order to activate said further configuration.

9. Programmable system according to Claim 8 with a position measurement device (1) according to Claim 6, **characterized in that** the programming unit (3) has a display (32) on which details from a table of contents (18a), which is assigned to the configuration script (18), are displayable as a selection menu.

10. Programmable system according to either of Claims 8 and 9, **characterized in that** the programming unit (3) is implemented by a data processing program in a processing unit (2) that is assigned to the position measurement device (1) and to which measurement values are transmitted during the measurement operation of the position measurement device (1).

11. Method for programming a position measurement device (1) according to one of Claims 1 to 7, wherein
a) a programming unit (3) having a processor (30) is connected to the position measurement device (1) and
b) commands, which are assigned to a specific further configuration of the position measurement device (1) and are stored in a memory (15) of the position measurement device (1), are executed by means of the processor (30) of the programming unit (3) in order to activate this configuration.

12. Method according to Claim 11, **characterized in that** only data that are stored in the memory (15) of the position measurement device (1) are accessed when executing the commands for activating the further configuration.

13. Method according to Claim 11 or 12, **characterized in that** the data and commands of a plurality of further configurations in the position measurement device (1) are combined into a configuration script (18), to which a table of contents (18a) is assigned, and **in that** designations of the activatable further configurations contained in the table of contents (18a) are displayed on a display (32) of the programming unit (3).

## Revendications

1. Dispositif de mesure de position, comprenant
- un capteur de valeurs de mesure (10) pour effectuer une mesure de position, et
- au moins une mémoire (15) dans laquelle sont stockées des données de paramètre qui définissent une configuration active qui permet de faire fonctionner le dispositif de mesure de position (1),
dans lequel, dans la mémoire (15) du dispositif de mesure de position (1), des données et des instructions sont stockées qui permettent d'activer au moins une autre configuration permettant de faire fonctionner le dispositif de mesure de position (1)
**caractérisé en ce que** pour l'activation de ladite autre configuration, une unité de programmation (3) présentant un processeur (30) peut être connectée au dispositif de mesure de position (1), et pour l'activation de ladite autre configuration, des instructions pour le dispositif de mesure de position (1) peuvent être exécutées par le processeur (30) qui sont associées à ladite autre configuration du dispositif de mesure de position (1) et qui sont stockées dans la mémoire (15) du dispositif de mesure de position (1).

2. Dispositif de mesure de position selon la revendication 1, **caractérisé en ce que** les données associées à une autre configuration respective, stockées dans la mémoire (15) du dispositif de mesure de position (1), sont suffisantes pour activer l'autre configuration respective sans qu'il soit nécessaire à cet effet d'accéder à des données supplémentaires provenant d'une source de données externes.

3. Dispositif de mesure de position selon l'une quelconque des revendications précédentes, **caractérisé en ce que** pour au moins une autre configuration, seule une partie des données qui définissent cette configuration est stockée dans la mémoire (15) du dispositif de mesure de position (1), et **en ce que** des données stockées dans la mémoire (15) provenant d'une autre configuration sont utilisées pour l'activation de cette configuration.

4. Dispositif de mesure de position selon la revendication 3, **caractérisé en ce que** pour l'activation de l'autre configuration pour laquelle seule une partie des données est stockée dans la mémoire (15) du dispositif de mesure de position (1), la configuration actuellement active du dispositif de mesure de position (1) ne doit être écrasée que partiellement par les données de l'autre configuration à activer.

5. Dispositif de mesure de position selon l'une quelconque des revendications précédentes, **caractérisé en ce que** pour l'activation d'une autre configuration, il faut accéder de plus à des données provenant d'un bloc de configuration (189) qui est également stocké dans la mémoire (15) du dispositif de mesure de position (1) et qui est accessible pour l'activation d'une pluralité d'autres configurations différentes.

6. Dispositif de mesure de position selon l'une quelconque des revendications précédentes, **caractérisé en ce que** pour l'activation sélective d'une pluralité de données et d'instructions prévues pour d'autres configurations différentes est regroupée en un script de configuration (18), et **en ce que** les autres configurations pouvant être activées sont désignées dans un index (181, 182, 183) du script de configuration (18).

7. Dispositif de mesure de position selon l'une quelconque des revendications précédentes, **caractérisé en ce qu'**au moins une autre configuration est associée à un code d'accès afin de permettre des limitations concernant les utilisateurs pouvant activer l'autre configuration correspondante.

8. Système programmable, comprenant un dispositif de mesure de position (1) selon l'une quelconque des revendications 1 à 7 et une unité de programmation (3) pouvant être connectée au dispositif de mesure de position (1), l'unité de programmation (3) présentant un processeur (30) qui permet d'exécuter les instructions associées à une autre configuration respective, stockées dans une mémoire (15) du dispositif de mesure de position (1), pour activer ladite autre configuration.

9. Système programmable selon la revendication 8 comprenant un dispositif de mesure de position (1) selon la revendication 6, **caractérisé en ce que** l'unité de programmation (3) présente un affichage (32) sur lequel des indications provenant d'un index (18a) associé au script de configuration (18) peuvent être affichées sous forme de menu de sélection.

10. Système programmable selon l'une quelconque des revendications 8 ou 9, **caractérisé en ce que** l'unité de programmation (3) est réalisée par un programme de traitement de données dans une unité de traitement (2) associée au dispositif de mesure de position (1) à laquelle des valeurs de mesure sont transmises en mode mesure du dispositif de mesure de position (1).

11. Procédé de programmation d'un dispositif de mesure de position (1) selon l'une quelconque des revendications 1 à 7, dans lequel
a) une unité de programmation (3) présentant un processeur (30) est connectée au dispositif de mesure de position (1), et
b) le processeur (30) de l'unité de programmation (3) exécute les instructions associées à une certaine autre configuration du dispositif de mesure de position (1) qui sont stockées dans une mémoire (15) du dispositif de mesure de position (1) pour activer cette configuration.

12. Procédé selon la revendication 11, **caractérisé en ce que** pour l'exécution des instructions pour l'activation de l'autre configuration, on accède exclusivement à des données qui sont stockées dans la mémoire (15) du dispositif de mesure de position (1).

13. Procédé selon la revendication 11 ou 12, **caractérisé en ce que** les données et instructions de plusieurs autres configurations sont regroupées dans le dispositif de mesure de position (1) en un script de configuration (18) qui est associé à un index (18a), et **en ce que** des désignations des autres configurations pouvant être activées, contenues dans l'index (18a), sont affichées sur un affichage (32) de l'unité de programmation (3).
